# EUROPÄISCHE PATENTANMELDUNG

(11) **EP 0 801 102 A2**
(43) Veröffentlichungstag der Anmeldung: **15.10.1997**
(21) Anmeldenummer: 97105489.5
(22) Anmeldetag: 02.04.1997
(51) Int. Cl.: C08K 5/15, C08K 5/20, C08L 23/02

(54) **Additivmischung mit nukleierender Wirkung für Kunststoffmassen**

(30) Priorität: 09.04.1996 DE 19614067
(71) Anmelder: HOECHST AKTIENGESELLSCHAFT, 65929 Frankfurt am Main (DE)
(72) Erfinder: Mehrer, Mathias, Dr., 86456 Gablingen (DE); Pfahler, Gerhard, Dr., 86169 Augsburg (DE); Stährfeldt, Thomas, Dr., 86356 Neusäss (DE)

(57) **Zusammenfassung**

Die vorliegende Erfindung betrifft Additivmischungen mit nukleierender Wirkung für Kunststoffmassen, enthaltend Nukleierungsmittel auf Basis von Dibenzylidensorbitol oder seinen Derivaten und amidofunktionelle Verbindungen. Die während der Verarbeitung und des Gebrauchs der damit ausgerüsteten Kunststoffe aus den Nukleierungsmitteln durch Zersetzung entstehenden Aldehyde werden durch Adsorption, Absorption und/oder chemische Reaktion abgefangen und gebunden.

## Beschreibung

Die vorliegende Erfindung betrifft Additivmischungen mit nukleierender Wirkung für Kunststoffmassen, um bei der Verarbeitung von Polymeren die Freisetzung von Zersetzungsprodukten von Derivaten des Dibenzylidensorbitols zu verringern. Letztere Produkte werden bei der Verarbeitung von Polyolefinen (EP-A-68773), bevorzugt bei der Verarbeitung von Polypropylen (US 4,016,118), als Nukleierungsmittel eingesetzt.

Bei der Verarbeitung von Polymeren kann eine nukleierende Wirkung durch die Verwendung von Dibenzylidensorbitol oder von Derivaten dieser Verbindung (JP SHO 54-121696) herbeigeführt werden. Diese Nukleierungsmittel bilden in der Polymerschmelze Strukturen aus, die die Bildung einer großen Zahl sehr kleiner Kristallite im polymeren organischen Material herbeiführen (vgl. T. L. Smith et al, Macromolecules 27 [1994] 3147 - 3155). Diese Nukleierungsmittel werden dem polymeren organischen Material meist vor der Verarbeitung zugesetzt und entfalten im Verlauf der Verarbeitung, besonders beim Abkühlen der Polymerschmelze, eine nukleierende Wirkung. Transparenz, Härte, Schlagzähigkeit und Elastizitätsmodul eines so hergestellten Formkörpers werden auf diese Weise deutlich verbessert.

Ein wesentliches Problem hierbei ist die partielle Zersetzung des Nukleierungsmittels Dibenzylidensorbitol und seiner Derivate, welche vor, während oder nach der Verarbeitung eines entsprechend ausgerüsteten Polymers stattfinden kann. Besonders während der Verarbeitung findet eine partielle Zersetzung der Derivate des Dibenzylidensorbitols statt, welche im wesentlichen auf einen bei den entsprechend üblichen hohen Temperaturen von meist weit über 200 °C stattfindenden thermischen Zerfall zurückgeführt werden kann (US 5,198,484, Spalte 3, Z.12). Außerdem wird eine Hydrolyse der chemisch recht labilen acetalischen Struktur für die partielle Rückspaltung der Dibenzylidensorbitol-Derivate verantwortlich gemacht (EP-A-451 002, S. 2, Z. 28), die besonders bei Anwesenheit von Säurespuren von Bedeutung ist.

Diese Zersetzung führt u. a. auch zu einer mehr oder weniger stark ausgeprägten Geruchsbelästigung, welche unmittelbar auf die Freisetzung eines aromatischen Aldehyds zurückgeführt wird (EP-A-421 634, S. 3, Z. 50).
Der freigesetzte Aldehyd beeinträchtigt Geruchs- und Geschmackseigenschaften des entsprechend nukleierten Materials ganz wesentlich. In EP-A-421 634 wird vorgeschlagen, ein solches Derivat des Dibenzylidensorbitols einzusetzen, das im Falle der partiellen Zersetzung einen vom menschlichen Geruchs- und Geschmacksinn nur schwach wahrnehmbaren Aldehyd freisetzt. In diesem Fall wird jedoch weder die partielle Zersetzung des Dibenzylidensorbitol-Derivats noch die Freisetzung unerwünschter Zersetzungsprodukte verringert, die Ursache des Problems ist somit nicht beseitigt.

Es gibt eine große Anzahl von Patentschriften, in denen die Verwendung zusätzlicher Chemikalien empfohlen wird, welche die chemisch labile, acetalische Struktur der Derivate des Dibenzylidensorbitols stabilisieren sollen. Besonders basische Zusätze sind dort von Bedeutung, da die Rückspaltung der Dibenzylidensorbitole vor allem durch saure Medien katalysiert wird. In US 4,518,582 und US 4,720,381 werden in diesem Sinne Magnesumsulfat, Zinkacetat und Hexamethylentriamin beschrieben. In US 4,722,835 werden Metallsalze, wie vor allem Zinkoxid, Calciumacetat, Magnesiumacetat, Calciumcarbonat und Calciumhydroxyd beschrieben. In EP-A-451 002 wird die Verwendung von organischen Basen beschrieben; als besonders geeignet herausgehoben werden dort Harnstoff, Imidazol, 2-Amino-2-hydroxymethyl-1,3-propandiol, 2-Amino-2-methyl-1-propanol und N,N-tetrakis-2-hydroxypropylethylendiamin.

Es wurde nun gefunden, daß der Zusatz von amidofunktionellen Verbindungen wie Polyamiden, Amidwachsen, thermoplastischen Polyamidharzen oder Mischungen hiervon die Freisetzung von Zersetzungsfragmenten der Dibenzylidensorbitol-Derivate, insbesondere die Freisetzung der entstehenden Aldehyde, deutlich erniedrigt. Der bei einer möglichen Zersetzung entstehende, aromatische Aldehyd wird durch Adsorption, Absorption und/oder chemische Reaktion sofort abgefangen und gebunden, ohne den Formkörper zu verlassen.

Dadurch wird die bekannte organoleptische Problematik der oben beschriebenen Nukleierungsmittel in einer Art und Weise reduziert, daß vor, während und nach der Verarbeitung des entsprechend ausgerüsteten Polymers vom menschlichen Geruchs- und Geschmacksinn deutlich weniger Aldehyd wahrgenommen werden kann als dies ohne die erfindungsgemäßen Additive der Fall ist.

Während sich die vorstehend erwähnten Patentschriften auf die Verringerung der Hydrolyse der Dibenzylidensorbitol-Derivate konzentrieren, ist die Verwendung einer speziell den Aldehyd abfangenden Verbindung nicht vorbeschrieben.

Gegenstand der Erfindung sind somit Additivmischungen mit nukleierender Wirkung für Kunststoffmassen, enthaltend Nukleierungsmittel auf Basis von Dibenzylidensorbitol oder seinen Derivaten und amidofunktionelle Verbindungen.

Bei den Nukleierungsmitteln handelt es sich um 1,3:2,4-Diaryliden-D-sorbitole, vorzugsweise um 1,3:2,4-Di(benzyliden)-D-sorbitol, 1,3:2,4- Di-(4-tolyliden)-D-sorbitol, 1,3:2,4-Di(4-ethyl-benzyliden)-D-sorbitol und 1,3:2,4-Di(3,4-dimethylbenzyliden)-D-sorbitol und Mischungen dieser Produkte untereinander.

Die Strukturformel für diese Verbindungsklasse, wobei R und R¹ bis R⁴ unabhängig voneinander Wasserstoff, C₁-C₅-Alkyl, Hydroxy, Methoxy, Mono- oder Dialkylamino, Nitro und Halogen bedeuten können, sieht wie folgt aus:

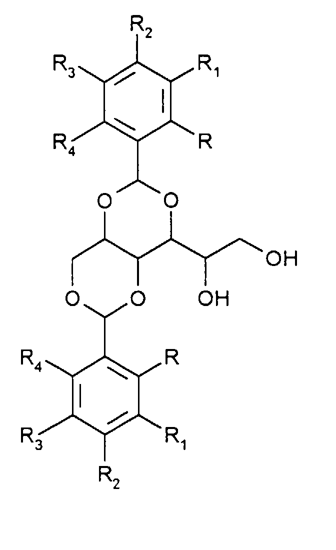

Unter den verschiedenen erfindungsgemäßen Amidwachsen und Polyamiden sind besonders Mono- und Bisamide von Fettsäuren und oligo- oder polymere thermoplastische Polyamidharze geeignet; ganz besonders geeignet sind Bisstearoylethylendiamin und Bislauroylethylendiamin und oligo- oder polymere Polyamidharze, deren Ausgangsstoffe geradkettige ω-Aminocarbonsäuren der Kettenlänge C₆-C₁₂ oder deren Lactame; adipinsaures, acelainsaures, sebacinsaures, dodecandicarbonsaures und heptadecandicarbonsaures Hexamethylendiamin; Isophthalsäure; Bis(4-aminocyclohexyl)-methan; 2.2-Bis(4'aminocyclohexyl)-propan; 3.3'-Dimethyl-4.4'-diaminodicyclohexyl-methan; Terephthalsäure oder deren Dimethylester; 1.6-Diamino-2.2.4-trimethylhexan; 1.6-Diamino-2.4.4-trimethylhexan; Hexamethylendiamin; 1-Amino-3-aminomethyl-3.5.5-trimethylcyclohexan; Bis(hexamethylen)triamin; Diethylentriamin; Diphenylamin; Ethylendiamin; Poly(oxypropylen)diamin; Tetraethylenpentamin oder Triethylentetramin sein können.

Das Mischungsverhältnis von amidofunktioneller Verbindung zu Nukleierungsmittel umfaßt in der Regel einen Bereich von 99:1 bis 1:99 Gewichtsteilen. Bevorzugt ist ein Mischungsverhältnis von 3:1 bis 1:3, ganz besonders bevorzugt ist ein Mischungsverhältnis von 1,5:1 bis 1:1,5.

Die die Dibenzylidensorbitol-Derivate enthaltende Kunststoffmasse enthält den Zusatz von amidofunktionellen Verbindungen in einer Konzentration von 0,01 bis 5 Gew.%, bevorzugt von 0,1 bis 1,0 Gew.-%, bezogen auf das gesamte polymere Material. Für die Konzentration an Dibenzylidensorbitol-Derivat gelten die gleichen Mengenangaben.

Das durch die erfindungsgemäßen Verbindungen stabilisierte organische Material kann gegebenenfalls noch weitere Additive enthalten, beispielsweise Antioxidantien, Lichtschutzmittel, Metalldesaktivatoren, Gleitmittel, Antistatika, flammhemmende Mittel, Pigmente und Füllstoffe. Als derartige Additive kommen beispielsweise Stoffe, wie sie in EP-A-705 836 beschrieben sind, in Betracht.

Weitere geeignete Additive sind 2,2',2''-Nitrilo[triethyl-tris(3,3',5,5'-tetra-tert.butyl-1,1'-biphenyl-2,2'-diyl)phosphit]; Bis[2-methyl-4,6-bis(1,1-dimethylethyl)phenol]phosphorigsäure-ethylester; sekundäre Hydroxylamine wie z. B. Distearylhydroxylamin oder Dilaurylhydroxylamin; Zeolithe wie z. B. DHT 4A; Kondensationsprodukt aus N,N'-Bis[(4,6-di(4-n-butylamino-2,2,6,6-tetramethylpiperid-4-yl)1,3,5-triazin-2-yl]-3-aminopropyl-ethylen-1,2-diamin und 2,4-Dichlor-6-(4-n-butylamino-2,2,6,6-tetramethyl-piperid-4-yl)1,3,5-triazin.

Das erfindungsgemäß mit Additiven ausgerüstete Material kann auch solche Costabilisatoren enthalten, welche besonders die sauer katalysierte Hydrolyse des Nukleierungsmittels zurückdrängen können, so z. B. Metallsalze, wie vor allem Zinkoxid, Zinkstearat, Zinkacetat, Magnesiumoxid, Magnesiumacetat, Magnesiumsulfat, Calciumoxid, Calciumacetat, Calciumcarbonat, Calciumstearat und Calciumhydroxyd; organische Basen wie beispielsweise Hexamethylentriamin, Harnstoff, Imidazol, 2-Amino-2-hydroxymethyl-1,3-propandiol, 2-Amino-2-methyl-1-propanol, N,N-tetrakis-2-hydroxypropylethylendiamin, Melamin und Cyanguanidin.

Bei dem organischen, polymeren Material handelt es sich beispielsweise um kristalline oder teilkristalline Polyolefine, wie Homo- oder Copolymere des PP, PE-HD oder LLDPE.

### Beispiele:

Es wurden verschiedene Polypropylenmischungen zusammengestellt und zu Formkörpern verarbeitet.

### 1. Polymermischungen

Folgende Mischungen wurden untersucht:

**Tabelle 1**

| Mat. | Nr. 1 | Nr. 2 | Nr. 3 | Nr. 4 | Nr. 5 | Nr. 6 | Nr. 7 | Nr. 8 | Nr. 9 | Nr. 10 | Nr. 11 |
|---|---|---|---|---|---|---|---|---|---|---|---|
| Basis | 100 | 100 | 100 | 100 | 100 | 100 | 100 | 100 | 100 | 100 | 100 |
| Nucl. 1 | | 0,2 | | 0,2 | | 0,2 | | 0,2 | | 0,2 | |
| Nucl. 2 | | | 0,2 | | 0,2 | | 0,2 | | 0,2 | | 0,2 |
| PA 1 | | | | 0,2 | 0,2 | | | | | | |
| PA 2 | | | | | | 0,2 | 0,2 | | | | |
| PA 3 | | | | | | | | 0,2 | 0,2 | | |
| FA 1 | | | | | | | | | | 0,2 | 0,2 |

Die Abkürzungen bedeuten:
- Basis =: Gemisch von:
100 Teile unstabilisiertes Polypropylen (Produkt und eingetragene Marke der HOECHST AG, ®Hostalen PPK 0160, MFI [190 °C/5 kg] = 2);
0,1 Teile Pentaerythrityl-tetrakis-[3-(3,5-di-tert.butyl-4-hydroxyphenyl)-propionat]
(Produkt und eingetragene Marke der HOECHST AG, ®Hostanox 010);
0,1 Teile Tris-(2,4-di-tert.butylphenyl)phosphit (Produkt und eingetragene Marke der HOECHST AG, ®Hostanox PAR 24);
0,1 Teile Calciumstearat (Produkt und eingetragene Marke der Firma Peter Greven Fett-Chemie GmbH & Co. KG, Bad Münstereifel, ®Liga 8600).
- Nucl. 1 =: 1,3:2,4-Di(4-methylbenzyliden)-D-sorbitol (Produkt und eingetragene Marke der RV Chemicals Ltd.,UK, ®Geniset MD);
- Nucl. 2 =: 1,3:2,4-Di(3,4-dimethylbenzyliden)-D-sorbitol (Produkt und eingetragene Marke der Firma Milliken, USA, ®Millad 3988);
- PA 1 =: Polyamid 6,6 (Produkt und eingetragene Marke der BAYER AG, ®Durethan AKV);
- PA 2 =: Thermoplastisches Polyamidharz (Produkt und eingetragene Marke der Firma WITCO GmbH, Bergkamen, ®Eurelon 964);
- PA 3 =: Thermoplastisches Polyamidharz (Produkt und eingetragene Marke der Firma WITCO GmbH, Bergkamen, ®Eurelon 975).
- FA 1 =: Bis-stearoyl- und/oder Bis-palmitoyl-ethylen-diamin (Produkt und eingetragene Marke der HOECHST AG, ®Hostalub FA1).

### 2. Präparation der Formkörper

### 2.1. Granulierung

Zur Herstellung der Basis wurden 100 Gewichtsteile Polypropylen, 0,1 Gewichtsteile Pentaerythrityl-tetrakis-[3-(3,5-di-tert.butyl-4-hydroxyphenyl)propionat], 0,1 Gewichtsteile Tris-(2,4-di-tert.butylphenyl)phosphit und 0,1 Gewichtsteile Calciumstearat in einem Diosma-Mischer der Fa. Dierks & Söhne, Osnabrück, 10 min bei Raumtemperatur und 720 U/min vorgemischt. Die Basismischung wurde mit 0,2 Gewichtsteilen des Nucleierungsmittels Nucl. 1 oder Nucl. 2 versetzt und danach 0,2 Gewichtsteile PA1, PA2, PA3 oder FA1 zugesetzt. Die Mischung wurde erneut intensiv homogenisiert und mit einem Extruder der Leistritz AG, Nürnberg, LSM 30.34 gg (gegenläufige Schneckenführung) granuliert. Die Temperaturen der sieben Heizzonen betrugen 200 °C, 210 °C, 220 °C, 230 °C, 230 °C, 240 °C, 240 °C. Die Temperatur der extrudierten Masse an der Austrittsdüse betrug 255 °C. Die Masse wurde in einem Wasserbad abgekühlt, mit einer Preßluftvorrichtung getrocknet und in einem Schneidegerät zu einem einheitlichen Granulat zerkleinert.

### 2.2. Spritzguß

Das Granulat aus 2.1. wurde mit einer Spritzgußmaschine der Firma Toshiba Machine Co., Japan, 100 EN zu Prüfkörpern weiterverarbeitet. Die Temperaturen der vier Heizzonen betrugen 210 °C, 220 °C, 230 °C, 240 °C. Die Temperatur der austretenden Masse an der Spritzgußdüse betrug 230 °C, die der Form betrug 25 °C. Bei den Prüfkörpern handelte es sich um Scheiben der Dicke 1 mm und dem Durchmesser 64 mm.

### 3. Auswertung

### 3.1. Organoleptische Prüfung am Granulat

100 g des Granulates aus 2.1. wurden in einem geschlossenen Glasgefäß mit einem Volumen von 0,5 l über einen Zeitraum von 12 Stunden bei 50 °C gelagert. Nach Abkühlen auf Raumtemperatur wurde die Intensität des vom Granulat ausgehenden Geruchs von einem 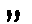 Testpanel" bestehend aus 3 Personen beurteilt. Die Geruchsintensität wurde mit einer Skala von 1 bis 10 bewertet. Da bereits reines Polypropylen einen leichten Eigengeruch besitzt, wurde die Note 1 dem Geruchsniveau reinen Polypropylens zugeordnet. Der Probe mit dem stärksten Geruch wurde die Note 10 zugeordnet. Die Ergebnisse der so durchgeführten organoleptischen Prüfung sind in Tabelle 2 zusammengefaßt. Die Noten verstehen sich als Durchschnittswert der vom Testpanel gefundenen Beurteilung und korrespondieren gut mit den Befunden aus EP 421 634, S. 8, Ex. 4.

**Tabelle 2**

| Gran. 1 Nr. | 2 | 3 | 4 | 5 | 6 | 7 | 8 | 9 | 10 | 11 |
|---|---|---|---|---|---|---|---|---|---|---|
| Note 1 | 10 | 4 | 6 | 3 | 5 | 3 | 2 | 2 | 2 | 2 |

### 3.2. Messung der Transparenz am spritzgegossenen Prüfkörper

Zur Charakterisierung der nukleierenden Wirkung der eingesetzten Additivmischungen im polymeren Material wurde die Lichtstreuung ( 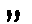 haze") bestimmt. Ein klarer Prüfkörper hat dabei einen kleinen Wert. Diese Meßwerte wurden mit einem Gerät der Firma BYK Gardner GmbH, Geretsried, (Hazegard System XL-211) bestimmt. Die Werte in Tabelle 3 verstehen sich als Mittelwert von zehn Messungen an jeweils verschiedenen Prüfkörpern aus 2.2. derselben Mischungszusammensetzung.

**Tabelle 3**

| Gran. Nr. | 1 | 2 | 3 | 4 | 5 | 6 | 7 | 8 | 9 | 10 | 11 |
|---|---|---|---|---|---|---|---|---|---|---|---|
| haze | 55 | 11 | 12 | 24 | 26 | 20 | 22 | 14 | 15 | 15 | 15 |

### 4. Beurteilung der Ergebnisse

Die Ergebnisse zeigen, daß mit der Verwendung von amidofunktionellen Verbindungen wie Polyamid 6,6, Amidwachs oder thermoplastischen Polyamidharzen die Geruchsbelästigung, für welche die Verwendung eines Nukleierungsmittels der Di-benzylidensorbitol-Substanzklasse verantwortlich gemacht wird, deutlich reduziert werden kann. Die Polyamide sollten möglichst trocken zum Einsatz kommen, da sonst eine leichte Vergilbung der Polyolefine auftreten kann. Auch bei Verwendung von ausreichend gut vorgetrocknetem Material (in Pulverform) wird zusammen mit Polyamid 6,6 eine leichte Vergilbung des Prüfkörpers beobachtet, womit sich wahrscheinlich auch der vergleichbar schlechte haze-Wert der Prüfkörper 4 und 5 erklären läßt. Die Verwendung von Amidwachs (besonders von ®Hostalub FA1) oder von thermoplastischen Polyamidharzen (besonders von ®Eurelon 975) führt hingegen zu keinen farblichen Problemen.

Bei der Verwendung von 1,3:2,4-Di(3,4-dimethylbenzyliden)-D-sorbitol sind in den Prüfkörpern stets kleine, staubähnliche Partikel ('Stippen') sichtbar. Der etwas schlechtere haze-Wert der mit 1,3:2,4-Di(3,4-dimethylbenzyliden)-D-sorbitols ausgerüsteten Prüfkörper gegenüber dem mit 1,3:2,4-Di(4-methylbenzyliden)-D-sorbitol ausgerüsteten Material, läßt sich mit der Bildung eben dieser Stippen im Material erklären. Dieser Effekt ist leicht verständlich, da 1,3:2,4-Di(3,4-dimethylbenzyliden)-D-sorbitol (Fp = 265 - 268°C) bei den Verarbeitungstemperaturen von Polypropylen seinen Schmelzpunkt noch nicht erreicht. Im Gegensatz hierzu ist 1,3:2,4-Di(4-methylbenzyliden)-D-sorbitol dank seines tiefer liegenden Schmelzpunktes (Fp. = 250 - 252 °C) bei den Verarbeitungstemperaturen des Polypropylens flüssig und deshalb vollständig im polymeren Material verteilbar.

## Patentansprüche

1. Additivmischung mit nukleierender Wirkung für Kunststoffmassen, enthaltend Nukleierungsmittel auf Basis von Dibenzylidensorbitol oder seinen Derivaten und amidofunktionelle Verbindungen.

2. Mischung gemäß Anspruch 1, dadurch gekennzeichnet, daß es sich bei den Nukleierungsmitteln um 1,3:2,4-Di(benzyliden)-D-sorbitol, 1,3:2,4-Di-(4-tolyliden)-D-sorbitol, 1,3:2,4-Di(4-ethyl-benzyliden)-D-sorbitol und 1,3:2,4-Di(3,4-dimethylbenzyliden)-D-sorbitol oder um beliebige Mischungen dieser Produkte untereinander handelt.

3. Mischung nach Anspruch 1 oder 2, dadurch gekennzeichnet, daß es sich bei den amidofunktionellen Verbindungen um Polyamide, Amidwachse, thermoplastische Polyamidharze oder um beliebige Mischungen hiervon handelt.

4. Mischung nach einem der Ansprüche 1 bis 3, dadurch gekennzeichnet, daß das Mischungsverhältnis von amidofunktioneller Verbindung zu Nukleierungsmittel einen Bereich von 99:1 bis 1:99, insbesondere von 3:1 bis 1:3, ganz besonders bevorzugt von 1,5:1 bis 1:1,5 Gewichtsteilen umfaßt.

5. Kunststoffmasse, dadurch gekennzeichnet, daß sie eine Additivmischung nach einem der Ansprüche 1 bis 4 enthält.

6. Kunststoffmasse nach Anspruch 5, dadurch gekennzeichnet, daß es sich bei den Polymeren um Polyolefine, insbesondere um PP, PE-HD und LLDPE handelt.

7. Kunststoffmasse nach Anspruch 5 oder 6, dadurch gekennzeichnet, daß sie amidofunktionelle Verbindungen in einer Konzentration von 0,01 bis 5 Gew.%, bevorzugt von 0,1 bis 1,0 Gew.%, bezogen auf das gesamte polymere Material, enthält.

8. Verwendung von Additivmischungen gemäß einem der Ansprüche 1 bis 4 zur Nukleierung von Kunststoffmassen, besonders von Polyolefinen, insbesonders von PP, PE-HD und LLDPE

9. Verwendung von amidofunktionellen Verbindungen gemäß Anspruch 3 bei der Verarbeitung und dem Gebrauch von mit Nukleierungsmitteln auf Basis von Dibenzylidensorbitol ausgerüsteten Kunststoffmassen, wobei die durch Zersetzung des Nukleierungsmittels entstehenden Aldehyde durch Adsorption, Absorption und/oder chemische Reaktion abgefangen und gebunden werden.
